# EUROPÄISCHE PATENTANMELDUNG

(11) **EP 2 708 577 A1**
(43) Veröffentlichungstag der Anmeldung: **19.03.2014**
(21) Anmeldenummer: 12184330.4
(22) Anmeldetag: 13.09.2012
(51) Int. Cl.: C08L 75/04, C08J 9/00, C08J 9/14, C08K 5/02, C08G 18/38, C08G 18/28

(54) **Polyurethane enthaltend halogenverbindungen**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Polyurethane, erhältlich durch Vermischen von (a) Polyisocyanat, (b) polymeren Verbindungen mit gegenüber Isocyanaten reaktiven Gruppen, (c) Katalysator (d) aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthält, (e) gegebenenfalls Treibmittel, (f) gegebenenfalls Kettenverlängerungs- und oder Vernetzungsmittel und (g) gegebenenfalls Hilfsmittel und/oder Zusatzstoffe zu einer Reaktionsmischung und ausreagieren der Reaktionsmischung zum Polyurethan, wobei der aliphatische Kohlenwasserstoff (d) kein Phosphorsäureester, Polyphosphat, Phosphonsäureester oder Phosphorigsäureester enthält. Weiter betrifft die vorliegende Erfindung ein Verfahren zur Herstellung solcher Polyurethane sowie deren Verwendung im Innenraum von Verkehrsmitteln.

## Beschreibung

Die vorliegende Erfindung betrifft Polyurethane, erhältlich durch Vermischen von (a) Polyisocyanat, (b) polymeren Verbindungen mit gegenüber Isocyanaten reaktiven Gruppen, (c) Katalysator (d) aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthält, (e) gegebenenfalls Treibmittel, (f) gegebenenfalls Kettenverlängerungs- und oder Vernetzungsmittel und (g) gegebenenfalls Hilfsmittel und/oder Zusatzstoffe zu einer Reaktionsmischung und ausreagieren der Reaktionsmischung zum Polyurethan, wobei der aliphatische Kohlenwasserstoff (d) kein Phosphorsäureester, Polyphosphat, Phosphonsäureester oder Phosphorigsäureester enthält. Weiter betrifft die vorliegende Erfindung ein Verfahren zur Herstellung solcher Polyurethane sowie deren Verwendung im Innenraum von Verkehrsmitteln.

Polyurethane zeichnen sich durch vielfältige Einsatzmöglichkeiten aus. Insbesondere im Automobilbau werden diese häufig aufgrund ihrer vielfältigen Eigenschaften eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Kabelisolierungen, Hinterschäumungen, beispielsweise bei Instrumententafeln, Lenkräder, Schaltknöpfe und Sitzpolster. An Polyurethane, die im Automobilbereich, insbesondere im Automobilinnenraum, eingesetzt werden, werden hohe Anforderungen gestellt. So werden hervorragende mechanische Eigenschaften verlangt, die sich über die Lebensdauer des Automobils nicht ändern, damit die Polyurethane je nach Einsatzgebiet sowohl ihre Aufgabe im täglichen Gebrauch, beispielsweise die Polsterungseigenschaften, Geräuschdämpfungseigenschaften, haptische Eigenschaften, oder Stabilisierungseigenschaften nicht verlieren aber auch im Fall eines Unfalls ihre sicherheitsrelevanten Aufgaben, beispielsweise die Dämpfung eines mechanischen Einschlags erfüllen.

Dabei herrschen im Automobil extreme klimatische Bedingungen, die die Alterung des Polyurethans beschleunigen. So können Temperaturen im Bereich von minus 10 °C und weniger sowie von mehr als 60 °C, bei Sonneneinstrahlung auch mehr als 100 °C erreicht werden. Die Luftfeuchtigkeit kann dabei bis zu 100 % relative Feuchte betragen.

Bei diesen extremen Klimabedingungen ist es auch erforderlich, dass im Automobilinnenraum eingesetzte Polyurethane möglichst geringe Emissionen flüchtiger Verbindungen verursachen. Diese rühren meist vom Einsatz flüchtiger Aminkatalysatoren. Um Emissionen zu reduzieren werden diese flüchtigen Aminkatalysatoren ganz oder teilweise durch einbaubare Katalysatoren ersetzt. Diese Verbindungen katalysieren die Polyurethanreaktion, verfügen aber gleichzeitig auch über gegenüber Isocyanatgruppen reaktive Gruppen, wodurch ein fester Einbau der Katalysatoren in das Polyurethan erfolgt. Diese einbaubaren Katalysatoren führen jedoch meist zu einer Verschlechterung der mechanischen Eigenschaften des erhaltenen Polyurethans, insbesondere nach Hitzelagerung oder Feucht-Wärmelagerung. das heißt bei Bedingungen, wie sie im Automobilinnenraum häufig erreicht werden.

Der Einsatz von chlorierten Verbindungen bei der Herstellung von Polyurethanen ist bekannt. So beschreibt beispielsweise WO 2009/065826 den Einsatz von chlorierten Paraffinen bei der Herstellung von Polyurethanintegralschaumstoffen. Dabei dienen die chlorierten Paraffine der Vermeidung von Kernverbrennungen in großvolumigen Teilen, wie hochhackigen Damenschuhen auf Basis von Polyesterolen und Monoethylenglycol als Kettenverlängerer. Weiter ist der Einsatz von halogenierten, kurzkettigen Kohlenwasserstoffen, zum Beispiel Fluor-Chlor-Kohlenwasserstoffen (FCKW) als Treibmittel bei der Herstellung von Polyurethanschaumstoffen bekannt. Mittlerweile ist der Einsatz von Fluor-Chlor-Kohlenwasserstoffen wegen deren ozonschädlichen Eigenschaften verboten. Auch die chlorierten Paraffine werden verdächtigt, karzinogen zu sein und werden daher im Wesentlichen nicht mehr eingesetzt oder sind zum Teil schon verboten.

Auch ist der Einsatz von Flammschutzmitteln auf Phosphorbasis in Polyurethanen bekannt. Diese phosphororganischen Flammschutzmittel basieren meist auf Phosphat-, Phosphonat- oder Phosphitestern. Bei den organischen Resten dieser Ester handelt es sich meist um aliphatische oder aromatische Kohlenwasserstoffe, die auch halogeniert sein können. Diese Verbindungen sind meist nur schlecht an die Polyurethanmatrix angebunden, so dass diese vermehrt zu Emissionen und damit zu Geruchsbelästigung führen. Verbesserungen der Alterungseigenschaften auf Basis dieser Flammschutzmittel sind nicht beschrieben.

Aufgabe der vorliegenden Erfindung war es, die Alterungseigenschaften von Polyurethanen, insbesondere bei hohen Temperaturen bzw. bei hohen Temperaturen und einem hohen Gehalt an Feuchtigkeit zu verbessern.

Die Aufgabe wurde gelöst durch Polyurethane, erhältlich durch Vermischen von (a) Polyisocyanat, (b) polymeren Verbindungen mit gegenüber Isocyanaten reaktiven Gruppen, (c) Katalysator (d) aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthält, (e) gegebenenfalls Treibmittel, (f) gegebenenfalls Kettenverlängerungs- und oder Vernetzungsmittel und (g) gegebenenfalls Hilfsmittel und/oder Zusatzstoffe zu einer Reaktionsmischung und ausreagieren der Reaktionsmischung zum Polyurethan, wobei der aliphatische Kohlenwasserstoff (d) kein Phosphorsäureester, Polyphosphat, Phosphonsäureester oder Phosphorigsäureester enthält.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen PolyurethanHalbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), gegebenenfalls Katalysatoren (c), aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthält (d) und gegebenenfalls Treibmittel (e), Kettenverlängerer (f) und sonstigen Hilfs- und Zusatzstoffen (g) zu einer Reaktionsmischung vermischt und ausreagieren lässt.

Dabei ist das erfindungsgemäße Polyurethan in einer bevorzugten Ausführungsform ein Polyurethanschaumstoff mit einer mittleren Dichte von 20 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) vorzugsweise einbaubare Aminkatalysatoren. Diese weisen mindestens eine, vorzugsweise 2 bis 8 und besonders bevorzugt 2 bis 3 gegenüber Isocyanaten reaktive Gruppen auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethyl-bis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-amino-ethoxyethanol) und (1,3-Bis(dimethylamino)-propan-2-ol).

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Als Komponente (d) werden ein oder mehrere aliphatische Kohlenwasserstoffe mit 2 bis 15, bevorzugt 3 bis 10, weiter bevorzugt 3 bis 6 und insbesondere 3 bis 4 Kohlenstoffatomen, die mindestens ein Heteroatom, ausgewählt aus der Gruppe, bestehend aus Sauerstoff, Stickstoff und Schwefel, und mindestens ein Halogenatom, vorzugsweise 2, 3 oder 4 Halogenatome, besonders bevorzugt 2 oder 3 Halogenatome, enthalten, eingesetzt. In einer weiteren bevorzugten Ausführungsform enthält die Verbindung (d) nur ein Halogenatom. Als Halogenatom enthält der aliphatische Kohlenwasserstoff (d) vorzugsweise Chlor. Dabei beträgt der Gehalt an Halogenatomen, besonders bevorzugt an Chlor, vorzugsweise mindestens 20 Gew.-%, besonders bevorzugt mindestens 30 Gew.-% und insbesondere mindestens 40 Gew.-%, jeweils bezogen auf das Gesamtgewicht der Komponente (d). Vorzugsweise enthält der aliphatische Kohlenwasserstoff (d) mindestens ein Halogenatom, das an ein primäres Kohlenstoffatom gebunden ist.

Der aliphatische Kohlenwasserstoff (d) kann dabei linear, verzweigtkettig oder cyclisch sein und ist bevorzugt linear oder verzweigtkettig. Dabei kann das Heteroatom endständig oder inmitten der Kette als Brückenatom vorliegen. Beispiele für Heteroatome inmitten der Kette sind Ethergruppen -O-, Thioethergruppen -S- oder tertiäre Stickstoffgruppen. Ist mindestens ein Heteroatom in der Mitte der Kette vorhanden, so handelt es sich vorzugsweise um eine Ethergruppe. Anstelle des Brückenatoms oder zusätzlich zum Brückenatom enthält der aliphatische Kohlenwasserstoff (d) mindestens eine Gruppe, die gegenüber Isocyanatgruppen reaktive Wasserstoffatome aufweist. Solche Gruppen sind beispielsweise -SH Gruppen, -NH- Gruppen, -NH₂ Gruppen oder-OH Gruppen. Besonders bevorzugt weist die Verbindung (d) mindestens eine OH-Gruppe, insbesondere eine sekundäre OH-Gruppe auf. Weiter bevorzugt weist der aliphatische Kohlenwasserstoff (d) zusätzlich zu der -OH Gruppe ein Brückenatom, besonders bevorzugt mindestens eine Ethergruppe, auf. In einer besonders bevorzugten Ausführungsform liegen zwischen dem Halogenatom und dem Heteroatom nicht mehr als 3 Kohlenstoffatome, vorzugsweise nicht mehr als 2 Kohlenstoffatome. Insbesondere enthält die Verbindung (d) eine OH-Gruppe, vorzugsweise eine sekundäre OH-Gruppe am Nachbarkohlenstoffatom zu dem Kohlenstoffatom, das das Halogenatom trägt. Dabei enthält der aliphatische Kohlenwasserstoff (d) kein Phosphorsäureester, Polyphosphat, Phosphonsäureester oder Phosphorigsäureester, bevorzugt enthält der aliphatische Kohlenwasserstoff (d) eine Phosphoratome.

Erfindungsgemäße aliphatische Kohlenwasserstoffe (d) weisen vorzugsweise eine Siedetemperatur unter Normalbedingungen von mindestens 100, besonders bevorzugt mindestens 120 und insbesondere mindestens 150 °C auf.

Beispiele für bevorzugte aliphatische Kohlenwasserstoffe (d) sind 1,3-Dichlor-2-propanol, 1,1,1-Trichloro-2-methyl-2-propanol hemihydrate, 2-[2-(2-Chloroethoxy)ethoxy]ethanol, 2-(2-Chlor-ethoxy)ethanol, Bis(2-(2-chlorethoxy)ethyl)ether, 1,2-Dichlor-3-propanol, 3-Chlor-1-propanol, 3-Chlor-2,2,dimethyl-1-propanol, 1-Chlor-2-propanol, 2-Chlor-1-propanol, 3-Brom-1-propanol, 4-Chlor-1-butandiol, 5-Chlor-1-pentanol und 6-Chlor-1-hexanol. Besonders bevorzugt sind 1,3-Dichlor-2-propanol, 1,2-Dichlor-3-propanol, 1-Chlor-2-propanol und3-Chlor-propanol, insbesondere 1,3-Dichlor-2-propanol, 1-Chlor-2-propanol und 3-Chlor-propanol.

Besonders bevorzugt beträgt der Anteil der Komponente (d) am Gesamtgewicht der Komponenten (a) bis (g) vorzugsweise größer 0 bis kleiner 3 Gew.-%, besonders bevorzugt 0,1 bis 2,5 Gew.-%, weiter bevorzugt 0,2 bis 2 Gew.-% und insbesondere 0,3 bis 1,5 Gew.-%. In einer besonders bevorzugten Ausführungsform ist der Anteil der Komponente (d) am Gesamtgewicht der Komponenten (a) bis (g) vorzugsweise so groß, dass die Summe der in (d) enthaltenen Halogenatome 0,1 bis 1,0 Gew.-%, besonders bevorzugt 0,15 bis 0,8 Gew.-% und insbesondere 0,2bis 0,6 Gew.-% beträgt.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), die aliphatischem Kohlenwasserstoff mit 2 bis 15 Kohlenstoffatomen (d), der mindestens ein Heteroatom, ausgewählt aus der Gruppe, bestehend aus Sauerstoff, Stickstoff und Schwefel, und mindestens ein Halogenatom enthalten, und gegebenenfalls die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch der aliphatischem Kohlenwasserstoff mit 2 bis 15 Kohlenstoffatomen (d), der mindestens ein Heteroatom, ausgewählt aus der Gruppe, bestehend aus Sauerstoff, Stickstoff und Schwefel, und mindestens ein Halogenatom enthalten, zugegeben.

Weiter umfasst die vorliegende Erfindung ein Verfahren zur Herstellung erfindungsgemäßer Polyurethane, bei dem man (a) Polyisocyanat, (b) polymeren Verbindungen mit gegenüber Isocyanaten reaktiven Gruppen, (c) gegebenenfalls Katalysator (d) aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthält, (e) gegebenenfalls Treibmittel, (f) gegebenenfalls Kettenverlängerungs- und oder Vernetzungsmittel und (g) gegebenenfalls Hilfsmittel und/oder Zusatzstoffe zu einer Reaktionsmischung vermischt und die Reaktionsmischung zum Polyurethan ausreagieren lässt, wobei der aliphatische Kohlenwasserstoff (d) kein Phosphorsäureester, Polyphosphat, Phosphonsäureester oder Phosphorigsäureester enthält.

Dabei zeigen erfindungsgemäße Polyurethane ein vorzügliches Alterungsverhalten, insbesondere bei der Hitzelagerung über 7 Tage bei 140 °C oder der Feucht-Wärmealterung über 3 Zyklen von 5 Stunden im Autoklaven bei 120 °C und 100 % relativer Feuchte. Durch Einsatz der aliphatischen Kohlenwasserstoffe (d) konnte insbesondere die Zugfestigkeit als auch die maximale Dehnung verbessert werden. Dabei erfolgte Feucht-Wärmelagerung sowie der Hitzelagerung gemäß DIN EN ISO 2440.Ein weiterer Vorteil der vorliegenden Erfindung ist, dass die aliphatischen Kohlenwasserstoffe (d) sehr gut verträglich sind mit Polyolen. Dadurch sind Polyolkomponenten im Zweikomponentenverfahren, die erfindungsgemäße aliphatische Kohlenwasserstoffe (d) enthalten, üblicherweise sehr lagerstabil. Ein weiterer Vorteil erfindungsgemäßer Polyurethane ist die geringe Verfärbung bei der Hitzelagerung.

Die Erfindung soll im Folgenden anhand von Beispielen verdeutlicht werden.

Ausgangsmaterialien:
- Polyol A:: Polyetherol mit einer OH-Zahl 35 mg KOH/g und einer Funktionalität von 2.7 auf Basis von Ethylenoxyd und Propylenoxid, einem Propylenoxidgehalt von 84 Gew.-% und einem Ethylenoxidgehalt von 14 Gew.-%
- Polyol B:: Graftpolyol mit 45% Feststoffgehalt (Styrolacrylnitril) in Polyol A als Trägerpolyol
- Polyol C:: Polyetherol mit einer OH-Zahl 27 mg KOH/g und einer Funktionalität von 2.5 auf Basis von Ethylenoxyd und Propylenoxid, einem Propylenoxidgehalt von 78 Gew.-% und einem Ethylenoxidgehalt von 21 Gew.-%
- BDO:: 1,4-Butandiol
- MEG:: Monoethylenglykol
- Isopur SA-21050:: Schwarzpaste der Firma ISL-Chemie
- Polycat 15:: Katalysator der Firma Air Products
- Jeffcat ZF10:: Katalysator der Firma Huntsman
- Jeffcat DPA:: Katalysator der Firma Huntsman
- DABCO:: Triethylendiamin
chlorierte Verbindungen
- Cl1:: 1,3-Dichlor-2-propanol
- Cl2:: 2-[2-(2-Chloroethoxy)ethoxy]ethanol
- Cl3:: 2-(2-Chloroethoxy)ethanol
- Cl4:: Bis(2-(2-chloroethoxy)ethyl) ether
- Cl5:: TCPP
- Cl6:: 3-Chlor-1-propanol
- Cl7:: 3-Chlor-2,2-dimethyl-1-propanol
- Cl8:: 1-Chlor-2-propanol
- Cl9:: Cerechlor S45 (chloriertes Paraffin C15-C17, 45% Cl der Firma INEOS)
- Br1:: 3-Brom-1-propanol
- Isocyanat A:: Carbodiimid-modifiziertes 4,4'-MDI mit einem NCO-Gehalt von 27.8

Die Mischung A wurde durch Vermischen von folgenden Komponenten hergestellt:
- 79.9: Gew.-Teile (TI.) Polyol A
- 4.8: Gew.-Teile Polyol B
- 8.1: Gew.-Teile MEG
- 5.0: Gew.-Teile Isopur SA-21050
- 0.6: Gew.-Teile Wasser
- 0.8: Gew.-Teile Polycat 15
- 0.8: Gew.-Teile Jeffcat ZF10
- 0.25 - 2.0: Gew.-Teile halogenierte Verbindungen Cl1 bis Cl9 oder Br1 gemäß Tabelle 1

Die Mischung A und die Isocyanat-Komponente A sowie die chlorierte Verbindung gemäß Tabelle 1 wurden bei einem Isocyanatindex von 102 miteinander vermischt und in eine geschlossene Form gegeben, so dass Formteile mit einer mittleren Dichte von 380 g/L erhalten wurden. Isocyanat B: Mischung von 85 Teile Carbodiimid-modifiziertes 4,4'-MDI und 15 Teil polymeres Diphenylmethandiisocyanat PMDI mit einem NCO-Gehalt von 27.1

Die Mischung B wurde durch Vermischen von folgenden Komponenten vorbereitet:
- 85.3: Gew.-Teile (TI.) Polyol A
- 10.0: Gew.-Teile Polyol C
- 2.5: Gew.-Teile Wasser
- 1.5: Gew.-Teile Triethanolamin
- 0.2: Gew.-Teile Jeffcat DPA
- 0.5: Gew.-Teile Jeffcat ZF10
- 0.5: Gew.-Teile Cl1

Die Mischung B und die Isocyanat-Komponente B wurden bei einem Isocyanatindex von 104.5 miteinander vermischt und in eine geschlossene Form gegeben, so dass Formteile mit einer mittleren Dichte von 137 g/L erhalten wurden.
- Isocyanat C:: Mischung von 85 Teile modifiziertes 4,4'-MDI und 15 Teil polymeres Diphenylmethandiisocyanat PMDI mit einem NCO-Gehalt von 24.6

Die Mischung C wurde durch Vermischen von folgenden Komponenten vorbereitet:
- 86.6: Gew.-Teile (TI.) Polyol A
- 11.0: Gew.-Teile BDO
- 0.1: Gew.-Teile Wasser
- 0.3: Gew.-Teile DABCO
- 2.0: Gew.-Teile Isopur SA-21050
- 0.4 - 1.0: Gew.-Teile (TI.) chlorierte Verbindungen gemäß Tabelle 3

Die Mischung C und die Isocyanat-Komponente C sowie die chlorierte Verbindung gemäß Tabelle 4 wurden bei einem Isocyanatindex von 103 miteinander vermischt und in eine geschlossene Form gegeben, so dass Formteile mit einer mittleren Dichte von 800 g/L erhalten wurden.

Zur Bestimmung der Messwerte für die mechanischen Eigenschaften wurde gemäß der folgenden Normen vorgegangen.

| Eigenschaft | Dimension | DIN-Norm |
|---|---|---|
| Härte | Shore A | 53505 |
| Zugfestigkeit | kPa | 1798 |
| Dehnung | % | 1798 |
| Dichte | g/mm3 | 845 |

Zur Durchführung der Hitzelagerung und die Feuchtwärmealterung wurde gemäß der Norm DIN EN ISO 2440 vorgegangen.

Tabelle 1: Mechanische Eigenschaften der erhaltenen Integral-schäume vor und nach der Hitzelagerung über 7 Tage bei 140°C ohne Zugabe von chlorierte Verbindungen (Ref.) sowie bei Zugabe der jeweiligen chlorierten Verbindungen Cl1 bis Cl9 und Br1 in den angegebenen Konzentrationen, jeweils angegeben in Gewichtsteilen bezogen auf das Gesamtgewicht der Mischung A.

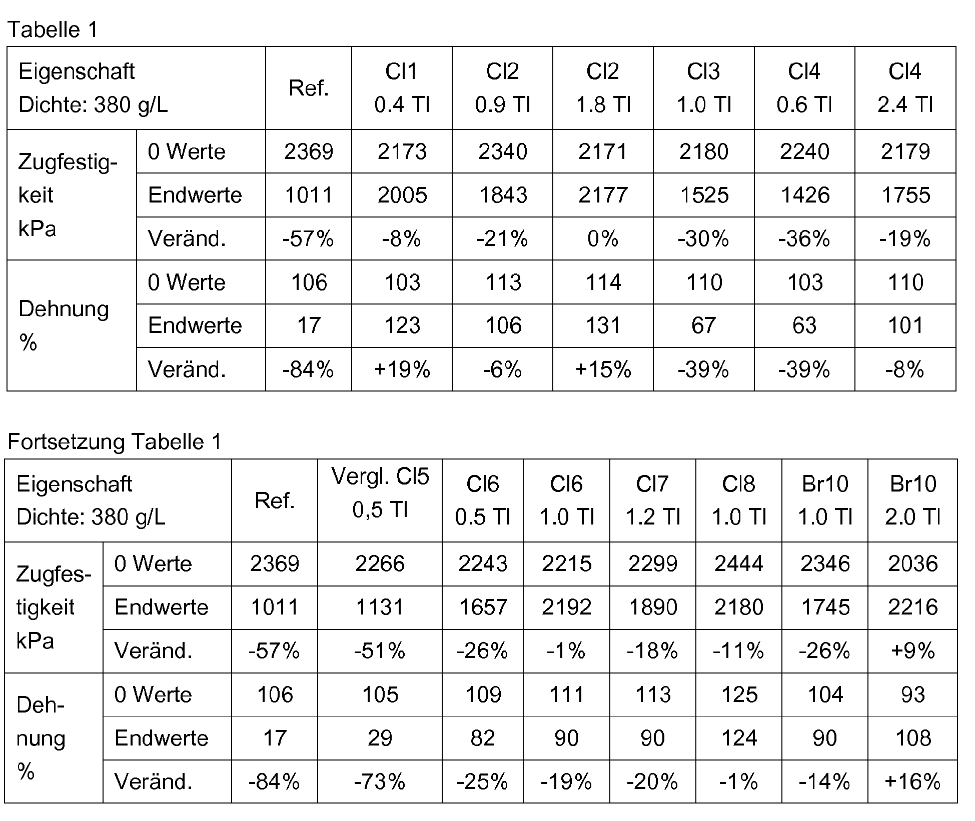

Tabelle 2: Mechanische Eigenschaften der erhaltenen Halbhart-schäume vor und nach der Hitzelagerung über 7 Tage bei 140°C ohne Zugabe von chlorierten Verbindungen (Ref.) sowie bei Zugabe der chlorierten Verbindung Cl1 in 0.5 Gewichtsteilen bezogen auf das Gesamtgewicht der Mischung B.

**Tabelle 2**

| Eigenschaft Dichte: 137 g/L | | Ref. | Cl1 |
|---|---|---|---|
| | | | 0.5 Tl |
| Zugfestigkeit kPa | 0 Werte | 426 | 417 |
| | Endwerte | 258 | 355 |

| | Veränd. | -39% | -15% |
|---|---|---|---|
| Dehnung % | 0 Werte | 84 | 86 |
| | Endwerte | 50 | 63 |
| | Veränd. | -41% | -27% |

Tabelle 3: Mechanische Eigenschaften der erhaltenen Integral-schäume vor und nach der Hitzelagerung über 14 Tage bei 150°C ohne Zugabe von chlorierten Verbindungen (Ref.) sowie bei Zugabe der chlorierten Verbindung Cl1 und Cl3 in den angegebenen Konzentrationen, jeweils angegeben in Gewichtsteilen bezogen auf das Gesamtgewicht der Mischung C.

**Tabelle 3**

| Eigenschaft Dichte: 800 g/L | | Ref. | Cl1 | Cl3 |
|---|---|---|---|---|
| | | | 0.4 Tl | 1.0 Tl |
| Zugfestigkeit kPa | 0 Werte | 4038 | 4136 | 4049 |
| | Endwerte | 1284 | 2226 | 1596 |
| | Veränd. | -71% | -46% | -60% |
| Dehnung % | 0 Werte | 87 | 115 | 102 |
| | Endwerte | 26 | 66 | 59 |
| | Veränd. | -70% | -43% | -42% |

Tabelle 4: Mechanische Eigenschaften der erhaltenen Integralschäume vor und nach der Feuchtwärmelagerung über 3 Zyklen von 5 Stunden bei 120°C und 100% Feuchtigkeit im Autoklaven bei Zugabe der jeweiligen chlorierten Verbindungen Cl1 und Cl4 in den angegebenen Konzentrationen, jeweils angegeben in Gewichtsteilen bezogen auf das Gesamtgewicht der Mischung A.

**Tabelle 4**

| Eigenschaft Dichte: 380 g/L | | Ref. | Vergl. Cl9 | Cl1 | Cl2 | Cl4 | Cl6 | Cl8 |
|---|---|---|---|---|---|---|---|---|
| | | | 1.0 Tl | 1.4 Tl | 2.7 Tl | 2.4 Tl | 2.0 Tl | 1.5 Tl |
| Zugfestigkeit kPa | 0 Werte | 2326 | 2386 | 2285 | 2350 | 2333 | 2010 | 2211 |
| | Endwerte | 963 | 1127 | 1769 | 1225 | 1377 | 1688 | 1847 |
| | Veränd. | -59% | -53% | -23% | -48% | -41% | -16% | -17% |
| Dehnung % | 0 Werte | 110 | 116 | 109 | 110 | 108 | 116 | 115 |
| | Endwerte | 70 | 87 | 128 | 69 | 92 | 93 | 137 |
| | Veränd. | -36% | -25% | +17% | -37% | -15% | -20% | +19% |

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) Katalysatoren,
(d) aliphatischem Kohlenwasserstoff mit 2 bis 15 Kohlenstoffatomen, der mindestens ein Heteroatom, ausgewählt aus der Gruppe, bestehend aus Sauerstoff, Stickstoff und Schwefel, und mindestens ein Halogenatom enthalten, und gegebenenfalls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt,
wobei der aliphatische Kohlenwasserstoff (d) kein Phosphorsäureester, Polyphosphat, Phosphonsäureester oder Phosphorigsäureester enthält.

2. Verfahren nach Anspruch 1, **dadurch gekennzeichnet, dass** der aliphatische Kohlenwasserstoff (d) ein oder mehrere Chloratome enthält.

3. Verfahren nach Anspruch 1 oder 2, **dadurch gekennzeichnet, dass** der aliphatische Kohlenwasserstoff (d) gegenüber Polyisocyanaten (a) reaktive Gruppen aufweist.

4. Verfahren nach einem der Ansprüche 1 bis 3, **dadurch gekennzeichnet, dass** der aliphatische Kohlenwasserstoff (d) keine Phosphoratome enthält.

5. Verfahren nach einem der Ansprüche 1 bis 4, **dadurch gekennzeichnet, dass** der aliphatische Kohlenwasserstoff (d) mindestens 30 Gew.-% Halogenatome enthält.

6. Verfahren nach einem der Ansprüche 1 bis 5, **dadurch gekennzeichnet, dass** der Anteil der aliphatische Kohlenwasserstoff (d), bezogen auf das Gesamtgewicht der Komponenten (a) bis (g), kleiner als 3 Gew.-% ist.

7. Verfahren nach einem der Ansprüche 1 bis 6, **dadurch gekennzeichnet, dass** die polymeren Verbindungen mit gegenüber Isocyanaten reaktiven Gruppen (b) Polyetherole enthalten.

8. Verfahren nach einem der Ansprüche 1 bis 7, **dadurch gekennzeichnet, dass** die Katalysatoren (c) einbaubare Aminkatalysatoren enthalten.

9. Verfahren nach einem der Ansprüche 1 bis 8, **dadurch gekennzeichnet, dass** das Polyurethan ein Automobilinnenraumteil ist.

10. Verfahren nach einem der Ansprüche 1 bis 9, **dadurch gekennzeichnet, dass** das Polyurethan ein Polyurethanschaumstoff mit einer mittleren Dichte von 20 bis 850 g/L ist.

11. Verfahren nach Anspruch 10, **dadurch gekennzeichnet, dass** der Polyurethanschaumstoff ein Polyurethanintegralschaumstoff mit einer mittleren Dichte von 150 bis 500 g/L ist.

12. Verfahren nach Anspruch 10, **dadurch gekennzeichnet, dass** das Polyurethan ein Polyurethanweichschaumstoff mit einer mittleren Dichte von 20 bis 100 g/L ist.

13. Verfahren nach einem der Ansprüche 1 bis 9, **dadurch gekennzeichnet, dass** das Polyurethan ein kompaktes Polyurethan mit einer mittleren Dichte von mehr als 850 g/L ist.

14. Verfahren nach Anspruch 13, **dadurch gekennzeichnet, dass** das Polyurethan eine Kabelummantelung ist.

15. Polyurethan, herstellbar nach einem Verfahren gemäß einem der Ansprüche 1 bis 14.

16. Verwendung von Polyurethanen nach Anspruch 15 im Innenraum von Verkehrsmitteln.
